# EUROPÄISCHE PATENTANMELDUNG

(11) **EP 1 843 418 A1**
(43) Veröffentlichungstag der Anmeldung: **10.10.2007**
(21) Anmeldenummer: 06009317.6
(22) Anmeldetag: 05.05.2006
(51) Int. Cl.: H01M 6/34, H01M 12/06

(54) **Sicherheitsschaltung für Batteriezellen einer Batterie**

(30) Priorität: 31.03.2006 DE 102006015537
(71) Anmelder: Neos International GmbH, 28876 Oyten (DE)
(72) Erfinder: Fertman Mark, Toronto ONT M2N IP5 (CA); Iarochenko Alexandre, Orillia ON L3V 6H7 (CA)
(74) Vertreter: Meissner, Bolte & Partner

(57) **Zusammenfassung**

Die Erfindung betrifft eine elektrochemische Spannungs-/Stromquelle, insbesondere Brennstoffzelle oder Batterie, bei der als Elektrolyt Meerwasser und/oder Alkalilösung verwendbar ist, mit wenigstens einer für die Verwendung in einer elektrochemischen Metall-Luft-Zelle geeigneten Anode (2), und wenigstens einer, insbesondere plattenförmigen, Gas-Diffusionskathode oder Luftkathode, die zumindest eine hydrophobe Schicht aufweist. Dabei weist das Gehäuse einen durch eine oder mehrere flüssigkeitsundurchlässige Wandungen begrenzten Gehäuseraum (4) auf, wobei dem Gehäuseraum (4) über zumindest eine Öffnung Luft oder Sauerstoff zuführbar ist. Zumindest eine der flüssigkeitsundurchlässigen Wandungen des Gehäuseraums (4) wird zumindest bereichsweise durch die Kathode (3) bzw. die hydrophobe Schicht der Kathode (3) gebildet. Die Anode (2) ist von der Kathode (3) unter Bildung eines Zwischenraums (13) beabstandet und außerhalb des Gehäuseraums (4) angeordnet. Der Zwischenraum (13) zwischen aktiver Schicht und Anode (2) ist zumindest teilweise mit einem Elektrolyt (5), insbesondere Meerwasser (21), Salzwasser oder Alkalilösungen, befüllbar.

## Beschreibung

Die vorliegende Erfindung betrifft eine elektrochemische Energie- und/oder Spannungs- und/oder Stromquelle, insbesondere eine Metall-Luft-Batterie oder eine Brennstoffzelle, bei der als Elektrolyt Meerwasser und/oder eine Alkalilösung verwendbar ist.

Derartige elektrochemische Energie-/Spannungs- und/oder Stromquellen sind für vielerlei Anwendungen geeignet, bei denen diese als Energiequellen eingesetzt werden können. Beispielhaft seien Schiffe und andere Wasserfahrzeuge genannt, elektronische Geräte, Spielzeuge und dgl. Von sogenannten Meereswasser-Zellen, bei denen als Elektrolyt Meerwasser eingesetzt wird, sind verschiedene Arten bekannt, die jeweils eine Reihe von Grundbauteilen aufweisen, insbesondere eine Kathode und eine Anode. Eine der bekannten Arten einer Meereswasser-Zelle ist eine Magnesium/Sauerstoff-Batterie mit einer Magnesiumanode, die Meerwasser als Elektrolyt nutzt sowie in dem Meerwasser gelösten Sauerstoff als Oxydationsmittel.

Die chemischen Prozesse, die in dieser Zelle ablaufen, sind die folgenden:

An der Anode wird Magnesium gelöst gemäß der Gleichung

2Mg = 2Mg²⁺ + 4e-.

An der Kathode wird Sauerstoff verbraucht gemäß der Formel

O₂ + 2H₂O + 4e- = 4OH-.

Zusammenfassend kann dies vereinfacht folgendermaßen beschrieben werden

2Mg + O₂ + 2H₂O = 2Mg(OH)₂.

Das Anodenmaterial kann dabei beispielsweise Magnesium, Zink, eine Mischung dieser Elemente sowie Legierungen daraus sein.

Die US 4,822,698 offenbart eine Energiezelle/Batterie zum Einsatz in Meerwasser. Diese Batterie arbeitet gemäß den oben genannten elektrochemischen Reaktionen, wobei Magnesium oder Zink als Anodenmaterial und eine Sauerstoffelektrode als Kathode eingesetzt wird. Der der Kathode zugeführte Sauerstoff ist in dem Meerwasser gelöst. Diese Meerwasserbatterie besteht aus einer zylindrischen Sauerstoffelektrodenkathode. Der Aufbau weist einzelne oder mehrere Anodenstäbe auf, die Magnesium oder Zink beinhalten. Die Sauerstoffelektrode ist denen ähnlich, die in anderen Batterien in vielerlei Arten verwandt werden, beispielsweise in der US 6,372,371 B1. In mit Luft gesättigtem Meerwasser ist die offenbarte Batterie in der Lage, circa 1,5 Volt bei 50 mA zu liefern. Dabei weist die Kathode eine Größe von ca. 800 cm² auf. Die Batterie verfügt über eine verhältnismäßig geringe Energiedichte von ca. 1 W/m².

In der US 5,405,717 ist eine Meerwasserzelle mit gegenüber der US 4,822,698 etwas erhöhter Leistung offenbart. Diese erhöhte Leistung ist bedingt durch die Wirkung von Wellen, die den Strom des Meerwassers durch die Kathode erhöht, um Sauerstoff zu liefern. Die Zellstruktur weist Wasserstromleitmittel auf, die den Wasserstrom durch die Zelle bewirken. Da Meerwasser über wenig Sauerstoff verfügt - ca. 10 g/m³ an der Meeresoberfläche und abnehmend zu geringeren Werten abhängig von der Tiefe und dem geographischen Ort - ist die Energiedichte auch bei dieser Batterie vergleichsweise gering (1 - 1,5 W/m²). Dies Energiedichte ist ca. einhundertmal geringer als bei klassischen Metall-Luft-Zellen in offener Luft.

Die US 5,225,291 offenbart eine Meerwasserbatterie, die wegen des Einsatzes einer Hybridkathode mit oder ohne gelöstem Sauerstoff arbeiten kann. Die Leistung dieser Zelle ist ca. 50 Mikroampere/cm² und 1-1,35 Volt bei gelöstem Sauerstoff (ca. 10 g/m³). Die nicht-sauerstoffbasierenden Zellreaktionen werden bei Zellspannungen von ca. 0,5 Volt beobachtet. Diese Meerwasserbatterie ist eine Langzeitbatterie mit geringer Ausgangsleistung.

Die US 5,427,871 betrifft galvanische Meerwasserzellen bzw. Batterien, die in dem Meerwasser aufgelösten Sauerstoff als Oxydationsmittel verwenden. Zielsetzung dieses Patents ist, galvanische Zellen mit einer im Vergleich zu bekannten Kathoden verbesserten Kathodenstruktur anzugeben. Dieses Patent offenbart eine besonders gute Geometrie der Kathodenstruktur in Form einer üblichen "Laborflaschenbürste". Diese Bürste verfügt über eine Vielzahl von dünnen, voneinander getrennten Kohlenstofffasern. Wenn die Fasern aneinander heften, werden ausschließlich die äußeren Oberflächen mit frischem, im Meerwasser gelösten Sauerstoff versorgt. Die Fasern können aus jedem leitfähigen Material hergestellt werden, das in Meerwasser stabil ist, beispielsweise Kupfer- oder Silberlegierungen, katalysiertem Edelstahl, Titan und/oder Kohlenstoff. Eine Kohlenstofffaser mit katalytischen Oberflächenmodifikationen ist ein bevorzugtes Material für die Reduktion von Sauerstoff. Eine in dem Patent offenbarte Kohlenstoftfaserkathode ist hergestellt aus einem Garn, das aus 3000 Fasern besteht, mit einem Durchmesser von 7000 nm. Die Bürste ist behandelt mit einem Lösungsmittel und Wärme. Insgesamt ist die vorgeschlagene Kohlenstoffstruktur ähnlich zu einer porösen Sauerstoff-Kohlenstoff-Kathode.

Die Kathodenbürste (30 mm bis 150 mm) der US 5,427,871 ist in einer Ausführungsform in einer an der Oberfläche des Meerwassers angeordneten Testzelle umgeben von vier Magnesiumanodenstäben. Die Last entspricht dabei 250 mA. Die Leistung der Zelle (Zellspannung versus Zeit (h)) weist übliche Abfälle der Zellspannung auf von 0,8 - 1 V bis zu 0,2 - 0,3 V. Die Abfälle der Zellspannung werden verursacht durch Zeiträume (10-20 h) mit nahezu unbewegtem Meerwasser. Bei ausreichend gelöstem Sauerstoff, Wasserstoffperoxyd oder Chlor und ausreichend großem Meerwassersalzgehalt leistet diese Zelle ca. 1 Volt und Strom von ca. 0,3 - 0,4 A. In diesem Fall liegt die Energiedichte bei ca. 0,002 W/cm² oder 0,003 W/cm³.

Eine Batterie, die auf den obigen Grundlagen basiert, ist beschrieben in "Proceedings of the Ocean Drilling program, Initial Reports Volume 191 by Kanazawa, T., Sager, W. W., Escutia, C., et al., 2001. Dabei ist die Anode ein AZ61 Magnesiumlegierungsstab mit einem Durchmesser von 0,184 m und einer Länge von 2,2 m inklusive der Anodenverbindungseinrichtung. Die Anode ist umgeben von Kathodenelementen, aufgehängt an einem Titanrahmen. Das Gewicht der Anode beträgt 120 kg. Das Gewicht der Titankathode beträgt jeweils 40 kg. Die Kathodenelemente bestehen aus einem Titandrahtkern mit radial angeordneten Kohlenstofffasern.

Die erreichbare Zellspannung beträgt ca. 1,6 V, obwohl dieser Wert stark abhängt von der Leitfähigkeit des Meerwassers, die mit der Temperatur und dem Salzgehalt variiert. Die maximale Zellleistung ist limitiert durch die Rate, in der Sauerstoff der Kathode zugeführt wird. Die Sauerstoffzuführrate ist proportional zu der Sauerstoffkonzentration in dem Meerwasser und fällt sehr stark ab mit ansteigender Tiefe. Um die angegebene Ausgangsleistung von 6 W für jede Zelle zu erreichen, ist eine Mindestzirkulation von 20 mm/s, eine Sauerstoffkonzentration von 3 ppm und ein Salzgehalt von 20 ‰ erforderlich. Ein 24-V DC/DC-Wandler wandelt die geringe Zellspannung (1,6 V) in eine Ausgangsspannung (24 V). Wenn die Zellspannung geringer wird als 1,2 V, wird der 24-V DC/DC-Wandler inaktiv, bis die Zellspannung auf 1,41 V erhöht wird.

Sämtliche der oben genannten Batterien/Zellen leiden unter einer begrenzten Zeitdauer ununterbrochener Ausgangsleistung. Dies ist bedingt durch Abfälle der Batterien/Zellen-Spannung, die verursacht wird durch Zeitperioden mit nahezu stagnierendem Meerwasser mit darin aufgelöstem Sauerstoff durch die langsame Diffusion von Sauerstoffmolekülen in Wasser (in Luft läuft dieser Prozess wesentlich schneller ab). Der Transport von Sauerstoff zu der Oberfläche der Kathode ist ein Reaktionsschritt, der die Leistung der oben beschriebenen Batterien/Zellen demnach wesentlich begrenzt.

Ein anderer galvanischer Typ von Seewasserbatterien, bei dem üblicherweise Meerwasser als Elektrolyt eingesetzt wird, weist eine Magnesiumanode und eine Kathode aus Kupferchlorid oder Silberchlorid auf. Diese Langzeitbatterien benötigen keinen in Meerwasser gelösten Sauerstoff, aber sie weisen eine geringe Ausgangsenergiedichte auf, sind im Allgemeinen schwer und benötigen eine große Menge von Raum. Eine Mg/CuCl-Batterie mit einem Wattjahr Ausgangsenergie kann 8 ½ Fuß lang sein, 9 Inch Durchmesser aufweisen und ca. 100 Pfund wiegen. Darüber hinaus weisen diese Batterien begrenzte Flexibilität in Bezug auf das Design auf und sind auf eine längliche Form beschränkt. Beispiele finden sich in der US 4,601,961, US 5,288,564, US 6,656,628 B2, die Teil dieser Anmeldung sein sollen.

Metall-Luft-Zellen sind bekannte Primärzellen, die eine Anode aus einem Metall aufweisen, etwa aus Aluminium, Magnesium oder Zink, und eine Luftkathode, die in einem geringen Abstand zu der Metallanode angeordnet ist, diese aber nicht berührt. Ein geeignetes Elektrolyt befindet sich in einem Raum zwischen der Kathode und der Anode. Die Anode ist in das Elektrolyt eingetaucht. Verschiedene Ausführungsformen derartiger Batterien und Verfahren zur Produktion und zum Einsatz derartiger Batterien sind in dem Stand der Technik bekannt, vgl. beispielsweise US 5,004,654, US 5,360,680, US 5,376,471, US 5,415,949, US 5,316,632. Typische Metall-Luft-Batterien bzw. Metall-Luft-Brennstoffzellen sind beispielsweise beschrieben in US 6,127,061. Diese Batterien/Brennstoffzellen weisen gute Leistungsdaten auf, wie etwa Volt-Ampere-Charakteristiken, Leistung und Energiedichte, flexibles Design. Jedoch können diese Metall-Luft-Zellen nicht Meerwasser nutzen bzw. in Meerwasser eingetaucht werden.

Ausgehend von dem vorstehend beschriebenen Stand der Technik ist es insbesondere Aufgabe der vorliegenden Erfindung, eine elektrochemische Energie- und/oder Spannungs- und/oder Stromquelle anzugeben, die insbesondere als Energiequelle dienen kann und vorzugsweise in Meerwasser einsetzbar ist bei gleichzeitig flexiblem Design sowie verträglichem Gewicht.

Diese Aufgabe wird gelöst durch eine elektrochemische Energie- und/oder Spannungs- und/oder Stromquelle, insbesondere Brennstoffzelle oder Batterie, bei der als Elektrolyt Meerwasser und/oder Alkalilösungen verwendbar ist, mit folgenden Merkmalen:
a) wenigstens einer für die Verwendung in einer elektrochemischen Metall-Luft-Zelle geeigneten, insbesondere plattenförmigen, vorzugsweise verbrauchbaren Anode,
b) wenigstens einer, insbesondere plattenförmigen, vorzugsweise unverbrauchbaren Gas-Diffusionskathode oder Luftkathode, die zumindest eine hydrophobe Schicht aufweist,
c) einem Gehäuse, das einen durch eine oder mehrere flüssigkeitsundurchlässige Wandungen begrenzten Gehäuseraum aufweist, wobei dem Gehäuseraum über zumindest eine Öffnung Luft oder Sauerstoff zuführbar ist,
d) zumindest eine der flüssigkeitsundurchlässigen Wandungen des Gehäuseraums wird zumindest bereichsweise durch die Kathode bzw. die hydrophobe Schicht der Kathode gebildet,
f) die Anode ist von der Kathode unter Bildung eines Zwischenraums beabstandet und außerhalb des Gehäuseraums angeordnet
g) der Zwischenraum zwischen Kathode und Anode ist zumindest teilweise mit einem Elektrolyt, insbesondere Meerwasser, Salzwasser oder Alkalilösung, befüllbar.

Erfindungsgemäß wird eine neue Struktur einer elektrochemischen Energie-/Spannungs- und/oder Stromquelle angegeben, insbesondere einer Metall-Luft-Batterie/Brennstoffzelle, die in verschiedenen Meerwasseranwendungen und Vorrichtungen arbeiten kann. Vorteilhafterweise ist die erfindungsgemäße Energie-/Spannungs- und/oder Stromquelle in der Lage, auch dann problemlos zu arbeiten, wenn kein oder zu wenig Sauerstoff im Meerwasser gelöst ist. Denn die Energie-/Spannungs- und/oder Stromquelle kann derart im Meerwasser positioniert werden, dass der oder den Kathoden über die Öffnung des Gehäuseraums Außenluft zugeführt werden kann. Im Gegensatz zu den Meerwasserbatterien des Standes der Technik muss daher die Kathode nicht den im Meerwasser gelösten Sauerstoff zur Reduktion nutzen, sondern kann unmittelbar den Sauerstoff der Luft verwenden. Die erfindungsgemäße Energie-/Spannungs- und/oder Stromquelle kann daher nahezu ununterbrochen Energie liefern. Des Weiteren ist die erfindungsgemäße Energie-/Spannungs- und/oder Stromquelle so aufgebaut, dass eine hohe Umweltverträglichkeit gegeben ist.

Die elektrochemische Energie-/Spannungs- und/oder Stromquelle kann eine einzelne Zelle oder eine Vielzahl von Zellen aufweisen sowie darüber hinaus weitere geeignete Bauteile/Rahmen/Gehäuse und Einrichtungen, wie etwa DC/DC-Wandler und dergleichen. Jede Zelle weist eine Luftkathode oder Luft-Bi-Kathoden als innere Elemente des Gehäuseraums auf sowie ein oder mehrere äußere Anodenelemente. Das jeweilige äußere Anodenelement besteht aus einem Material, das ausgewählt ist aus der Gruppe Aluminium, Zink, Magnesium, Aluminiumlegierungen, Magnesiumlegierungen, Zinklegierungen und Mischungen aus diesen. Die Anode ist in geringer räumlicher Distanz gegenüber der Kathode angeordnet, d.h. von dieser beabstandet, sie berührt die Kathode aber nicht. Zwischen Anode und Kathode ist als Elektrolyt Meerwasser angeordnet. Die äußere Anode ist vollständig oder teilweise in das Elektrolyt eingetaucht. Ein Meerwasserelektrolyt wird bevorzugt, erfindungsgemäß kann die elektrochemische Energie-/Spannungs- und/oder Stromquelle aber auch mit einem Alkalielektrolyt betrieben werden.

Die Anode ist aus einem Material gebildet, das ausgewählt ist aus der Gruppe bestehend aus Aluminium, Zink, Magnesium und Legierungen derselben. Zusätzlich können - in wirksamer Menge - Additive vorgesehen sein aus Ga, In, Sn, Cd, Pb.

Die Luft/Gas-Diffusionskathode weist vorzugsweise mehrere Schichten auf, und zwar zumindest ein Stromsammelgitter (current collector mesh), eine gasundurchlässige, hydrophile, aktive Schicht mit einem porösen Hochdispersionskohlenstoff (high dispersion porous carbon) und eine gasdurchlässige, hydrophobe Schicht.

Das insbesondere aus Kunststoff bestehende Gehäuse der Energie-/Spannungs- und/oder Stromquelle kann einen oder mehrere Rahmen oder rahmenähnliche Strukturen aufweisen, an denen die Kathoden jeweils flüssigkeitsdicht befestigt sind. In einer bevorzugten Weiterbildung der elektrochemischen Energie-/Spannungs- und/oder Stromquelle bilden die Wandungen des Gehäuseraumes zumindest annähernd einen Quader. Wie der Fachmann erkennt, sind natürlich auch andere Formen möglich. Vorzugsweise werden wenigstens zwei gegenüberliegende Wandungen des Gehäuseraumes zumindest bereichsweise durch die insbesondere plattenförmig ausgebildeten Kathoden bzw. die hydrophoben Schichten der Kathode gebildet.

Dem Gehäuseraum kann die Luft oder der Sauerstoff über wenigstens ein in einer der Gehäuseraumwandungen angeordnetes Durchtrittsloch zugeführt werden. Bezogen auf den bestimmungsgemäßen Gebrauch der Energie-/Spannungs- und/oder Stromquelle, insbesondere bezogen auf deren Positionierung im Meerwasser, ist das Durchtrittsloch vorzugsweise im oberen Bereich der Wandungen des Gehäuseraumes angeordnet, besonders bevorzugt in der Oberseitenwandung der einen Quader bildenden Gehäuseraumwandungen. In einer weiteren Ausführungsform kann eine sich vorzugsweise nach oben erstreckende Luftzuführleitung vorgesehen sein, die flüssigkeitsdicht, insbesondere einstückig, mit dem Durchtrittsloch verbunden ist oder in dieses mündet.

In einer weiteren Ausführungsform der vorliegenden Erfindung kann der elektrochemischen Energie- und/oder Spannungs- und/oder Stromquelle, insbesondere dem Gehäuse, vorzugsweise dem Gehäuseraum ein Behältnis, etwa ein Ballon oder ein Tank, zugeordnet sein, dass mit Luft oder Gas füllbar/gefüllt ist, wobei die Luft oder das Gas aus zumindest einer Öffnung des Behältnis dem Gehäuseraum, insbesondere der Gas-Diffunsionskathode oder Luftkathode, zuführbar ist. Bei dieser Ausführungsform ist die elektrochemischen Energie- und/oder Spannungs- und/oder Stromquelle unabhängig von Umgebungsluft. Dabei kann das Behältnis vorzugsweise innerhalb des Gehäuseraums angeordnet sein. Weiter kann vorgesehen sein, die Luft oder das Gas aus dem Behältnis dem Gehäuseraum, insbesondere der Gas-Diffusionskathode oder Luftkathode, über eine Zuführleitung zuzuführen.

Weitere Merkmale der vorliegenden Erfindung ergeben sich aus den beigefügten Unteransprüchen, aus der nachfolgenden Beschreibung bevorzugter Ausführungsbeispiele der vorliegenden Erfindung sowie aus den beigefügten Zeichnungen.

In den Zeichnungen zeigen:
- Fig. 1 / 2:: vereinfachte Darstellungen typischer Metall-Luft-Batterien/Brennstoffzellen mit einer einzelnen bzw. einer Bi-Kathode gemäß dem Stand der Technik,
- Fig. 3:: eine erfindungsgemäße inverse Brennstoffzelle/Batterie in perspektivischer Schrägansicht,
- Fig. 4:: die Batterie gemäß Fig. 3 im Querschnitt, eingetaucht in Meerwasser,
- Fig. 5 / 6:: eine Parallel- bzw. Reihenschaltung der inversen Batterie gemäß Fig. 3,
- Fig. 7:: eine vereinfachte Darstellung der inversen Meerwasserbatterie gemäß Fig. 3.

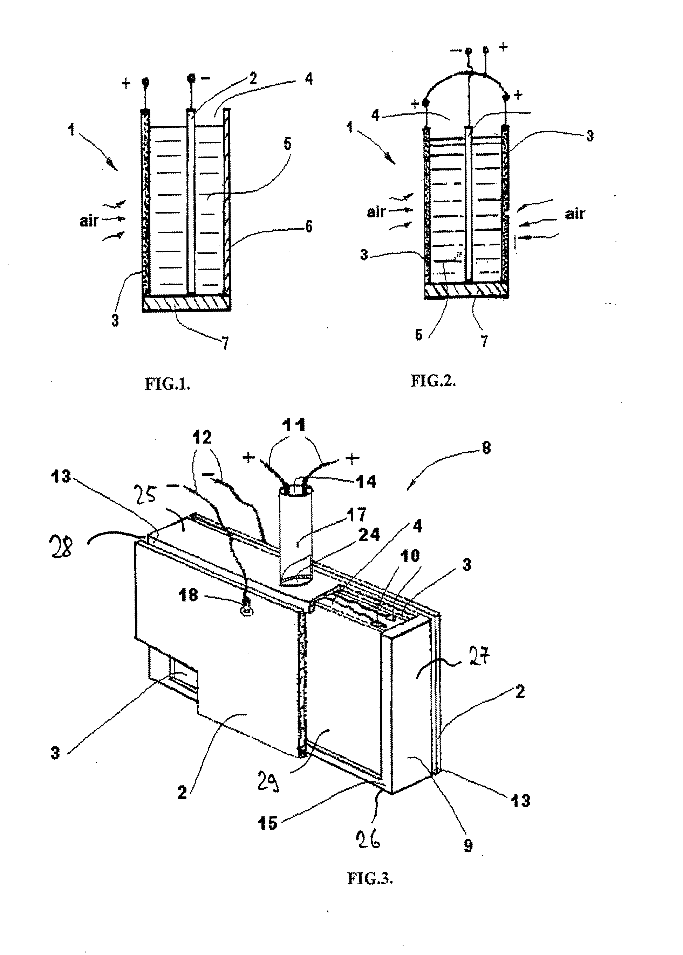

Fig. 1 und 2 zeigen eine Metall-Luft-Batterie/Brennstoffzelle 1 mit einer einzelnen Kathoden bzw. Bi-Kathoden 3. Die einzelne bzw. die Bi-Kathoden 3 sind jeweils so angeordnet und orientiert, dass deren gasdurchlässigen, hydrophoben Schichten zu der offenen Umgebungsluft hingewandt sind, um Sauerstoff für eine Reduktionsreaktion zu absorbieren. Bei der Metall-Luft-Batterie/Brennstoffzelle 1 gemäß Fig. 1 bildet die einzelne Kathode 3 gemeinsam mit einer Seitenwandung 6 und einer Bodenwandung 7 einen inneren Gehäuseraum 4, der mit einem Elektrolyt 5 gefüllt ist. Eine Anode 2 ist in das Elektrolyt 5 eingetaucht. Bei der Ausführungsform der Fig. 2 ist die Seitenwandung 6 durch die Bi-Kathode 3 gebildet. Die einzelne Kathode 3 bzw. die Bi-Kathoden 3 weisen jeweils an deren dem Gehäuseraum 4 zugewandten Seiten eine hydrophile Schicht auf, die gasundurchlässig ist.

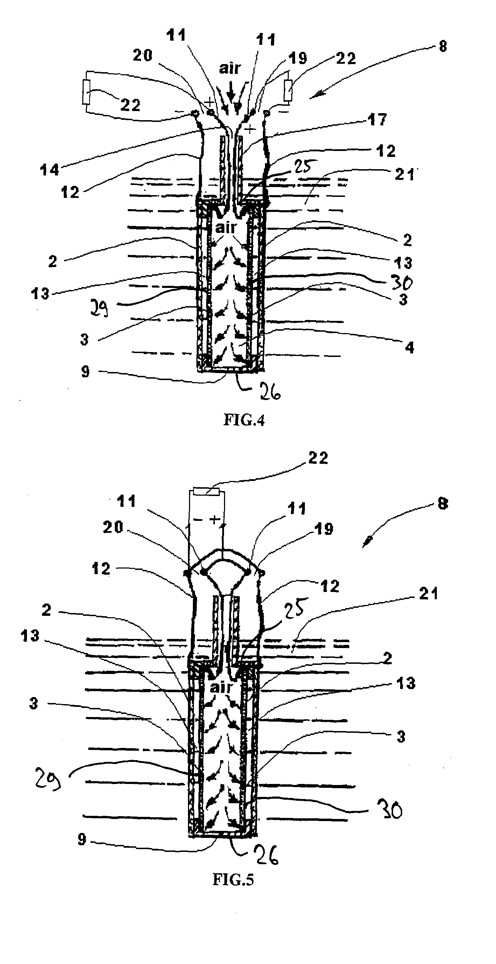

Fig. 3 zeigt eine erfindungsgemäße elektrochemische Energie-/Spannungs- und/oder Stromquelle, nämlich eine inverse Brennstoffzelle/Luft-Metall-Batterie 8. Die Energie-/Spannungs- und/oder Stromquelle 8 weist ein im Wesentlichen quaderförmig aufgebautes Kunststoffgehäuse 9 auf. Das Gehäuse 9 wird gebildet durch eine obere Wandung 25, eine untere Wandung 26, sowie Seitenwandungen 27, 28, 29, 30. Die Seitenwandungen 29, 30 des Gehäuses 9 werden durch zwei flächige, plattenförmige Kathoden 3 gebildet.

Jede der beiden Kathoden 3 ist flüssigkeitsdicht jeweils mit einer Rahmenstruktur 15 des Gehäuses 9 verbunden, d.h. an dieser Struktur in geeigneter Weise befestigt. Jede der beiden Rahmenstrukturen 15 wiederum ist einstückig mit der oberen und unteren Wandung 25, 26 sowie den Seitenwandungen 27, 28 verbunden bzw. geht in diese Wandungen über.

Die Kathoden 3 bzw. die Bi-Kathode 3 sind Luft-/Gasdiffusionskathoden. Jede Kathode ist vorzugsweise gebildet aus thermoplastischen Verbundmaterialien und weist einen Mehrschichtaufbau auf. Eine dieser Schichten ist eine Stromsammelschicht, vorzugsweise mit dendritischen Vorsprüngen (dendritic protrusions), ausgewählt aus einem inerten Metall wie etwa Nickel, Kupfer mit einem Überzug aus Au, Ni, Pb, Sn oder dgl. Weiter ist eine gasundurchlässige, hydrophile, aktive Schicht vorgesehen, die vorzugsweise aus einem porösen Hochdispersionskohlenstoff besteht. Weiter ist eine gasdurchlässige, hydrophobe Schicht vorgesehen, vorzugsweise aus porösem Kohlenstoff. Die hydrophobe Schicht und die hydrophile, aktive Schicht können katalysiert werden durch Edelmetalle wie etwa Pt-Pd oder Ag oder Silberoxid und/oder komplexe Macrocyklen oder Chelaten wie etwa Kohlenstoff-Fullerenes oder Kohlenstoff-Nanotubes. Als gasdurchlässige hydrophobe Schicht kann möglicherweise eine PTFE poröse Membran benutzt werden.

Allgemein ist die Gasdiffusionskathode 3 ähnlich einer Sauerstoff/Luft-Elektrode, die in üblichen Metall-Luft-Batterien/Brennstoffzellen in vielerlei Ausführungsformen eingesetzt wird, vg. US 4,448,856, US 4,885,217, US 5,312,701, US 5,441,823, US 6,127,061, US 6,203,940. Diese Referenzen können für die Konstruktion einer geeigneten Elektrode herangezogen werden.

Der von den Wandungen 25 - 30 bzw. den Rahmen 15 begrenzte Gehäuseraum weist an der Oberseitenwandung 25 ein Durchtrittsloch 24 auf. Durch dieses Durchtrittsloch 24 ist dem Gehäuseraum 4 Luft bzw. Sauerstoff zuführbar. Eine Luftzuführleitung 17 erstreckt sich senkrecht zu der Oberseitenwandung 25. Mit ihrem einen Ende ist die Luftzuführleitung 17 an das Durchtrittsloch 24 angeschlossen bzw. mündet in dieses. Die Luftzuführleitung ermöglicht es, die Energie-/Spannungs- und/oder Stromquelle 8, weit in Meerwasser einzutauchen. Wichtig ist dabei, dass das dem Gehäuseraum 4 entgegengesetzte, freie Ende der Luftzuführleitung 17, das eine Öffnung 14 aufweist, oberhalb des Meerwasserspiegels angeordnet ist. Dann wird dem Gehäuseraum 4 und damit den Kathoden 3 über die Luftzuführleitung weiterhin Außenluft bzw. Umgebungsluft zugeführt.

Auf der dem Gehäuseraum 4 zugewandten Seite weist jede der Kathoden 3 eine gasdurchlässige, hydrophobe Schicht auf. Auf der äußeren Seite jeder Kathode 3, d. h. auf der dem Gehäuseraum 4 abgewandten Seite weist jede Kathode 3 eine gasundurchlässige, hydrophile, aktive Schicht auf. Zwischen der äußeren und der inneren Schicht der Kathoden ist eine gitterförmige Schicht 10 angeordnet, die mit einer elektrischen Leitung 11, insbesondere einem elektrischen Kabel, verbunden ist, die den positiven elektrischen Anschluss bildet.

Außerhalb des Gehäuseraumes 4, nämlich den Kathoden 3 gegenüberliegend, sind jeweils plattenförmige Anoden 2 angeordnet. Die Anoden 2 sind in geringem räumlichen Abstand gegenüber den Kathoden 3 angeordnet unter Bildung eines Zwischenraumes 13.

Die Anodenplatten 2 können nach Verbrauch leicht mechanisch ersetzt werden durch neue Anodenplatten (Aufladen der Batterie). Das Anodenmatrixmaterial kann gebildet sein aus Metallen, die ausgewählt sind aus der Gruppe Aluminium, Zink, Magnesium und Legierungen derselben und kann eine oder mehrere Additive aus Ga, In, Sn, Cd, Pb in wirksamer Menge aufweisen.

Jede Anode weist einen Anschluss 18 auf, der mit elektrischen Leitungen bzw. Kabeln 12 verbunden ist, die den negativen Anschluss bilden.

Fig. 4 zeigt schematisch eine Querschnittsseitenansicht der inversen Batterie 8, und zwar in in Meerwasser 21 eingetauchtem Zustand. Die Leitungen bzw. Kabel 11 und 12, die jeweils zu der Anordnung der Anoden 2 und Kathoden 3 mit Zwischenräumen 13 korrespondieren, bilden zwei Paare von Positiv-/Negativ-Ausgängen 19 bzw. 20 der Brennstoffzelle.

Die grundsätzlichen elektrochemischen Prozesse der inversen Batterie 8 sind durch die folgenden klassischen elektrochemischen Reaktionen in der Meerwasserlösung zu beschreiben:

Die Auflösung der Anode 2 (negative Aluminiumelektrode) findet in dem Zwischenraum 13 gemäß der folgenden Gleichung statt:

4AI + 16OH⁻ → 4AI (OH)₄⁻ + 12e⁻.

Sauerstoffmoleküle gelangen aus der Luft durch die Luftzuführleitungen 17 und das Durchtrittsloch 14 in den Gehäuseraum 4 und diffundieren in die gasdurchlässige Schicht der Gasdiffusionskathode 3. Im Vergleich zu Meerwasserbatterien gemäß dem Stand der Technik, bei denen die Diffusion der Sauerstoffmoleküle in der Flüssigkeit sehr langsam ablaufen, was zu einem Abfallen der Ausgangsleistung und zu Spannungsabfällen führt und damit zu Leistungsunterbrechungen, läuft in der erfindungsgemäßen Batterie die Diffusion der Sauerstoffmoleküle sehr schnell ab, da sie unmittelbar der Luft ausgesetzt ist.

Die Reduktion von Sauerstoff an der positiven Elektrode/Gasdiffusionskathode 3 läuft ab gemäß der folgenden Gleichung:

3O₂ + 6H₂O + 12e⁻ = 12OH⁻.

Zusammenfassend:

4Al + 3O₂ + 6H₂ → 4Al(OH)₃.

In diesem Redoxprozess fließen Elektronen jeweils von der Anode 2 über die Leitungen 11 sowie eine Last 22 und über die Leitungen 12 des Paares 19 oder 20 zu der jeweiligen Gasdiffusionskathode 3, wobei die Lasten 22 jeweils getrennt mit den Ausgängen 19 und 20 verbunden sind.

Fig. 5 zeigt eine Parallelschaltung bzw. Parallelverbindung der Anoden 2 und der Kathoden 3 durch Parallelverbindung der unipolaren Leitungen 11 bzw. 12. Eine Stromkreisverbindung im Sinne einer Parallelschaltung weist die Ausgangsspannung der jeweiligen einzelnen Zelle auf, aber die Quellenimpedanz ist zweifach geringer. Daher können der Strom und die Leistung zweifach höher sein. In dieser Situation gibt es keinen Stromverlust.

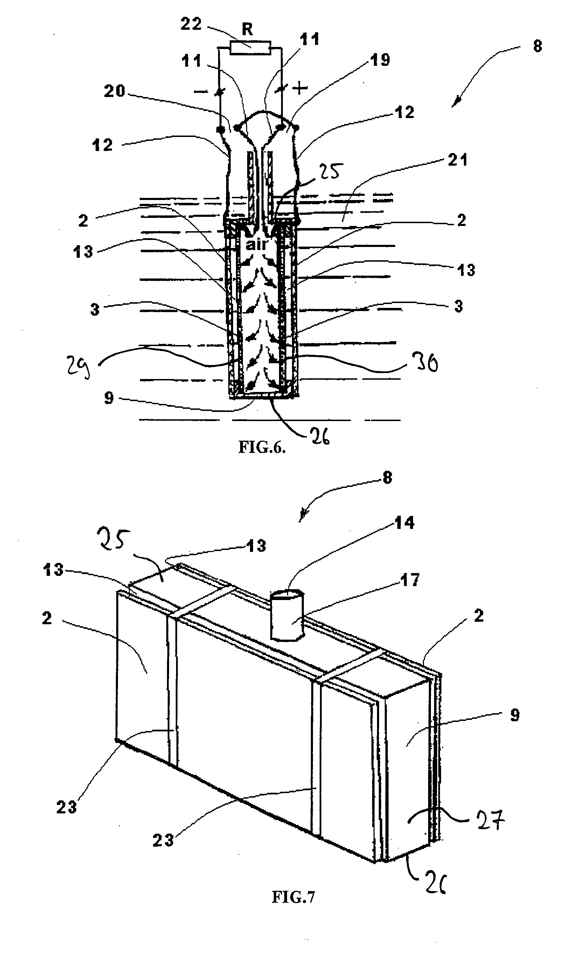

Fig. 6 zeigt eine Verbindung der Anoden 2 und der Kathoden 3 in Serie, wobei die positive Leitung 11 des Ausgangs 20, die zu der einen Brennstoffzelle gehört, mit der Leitung 12 des Ausgangs 19 der zweiten Brennstoffzelle verbunden ist. Die Serienschaltung weist fast doppelte Ausgangsspannungen auf aufgrund geringen Stromverlustes durch das Meerwasserelektrolyt in dem sehr schmalen Zwischenraum 13.

Die inverse Meerwasserbatterie gemäß dieser Erfindung ist in einer vereinfachten Ansicht in Fig. 7 gezeigt. Das rechteckig geformte Kunststoffgehäuse 9 weist eine Größe von 9 cm x 5 cm x 2 cm auf, wobei als Kunststoff Polyethylen eingesetzt ist.

Das Anodenmaterial ist gebildet aus 99,4 % w/w Al mit Zusätzen von 0,6 % w/w In, eingebaut in die Aluminiummatrix. Die Größe der Anodenplatten 2 ist 8,5 cm x 4,5 cm x 0,2 cm und das Gewicht jeder Platte beträgt 28 g. Die Anoden 2 verfügen über den negativen Elektrodenanschluss 18, der mit den isolierten Leitungen 12 verbunden ist als Stromsammler. Die Anodenplatten 2 sind leicht an beiden Seiten des Gehäuses 9 durch Gummistreifenbänder 23 befestigt. Die Breite des Zwischenraumes 13 zwischen der Anodenplattenoberfläche und der gasundurchlässigen, hydrophilen, aktiven äußeren Schicht der Kathoden 3 beträgt 1,5 mm.

Die Kathodenschichten der Kathode 3 weisen einen aktiven Bereich für die elektrochemischen Reaktionen auf von ca. 64 cm² mit jeweils 32 cm² (4 cm x 8 cm) auf jeder Seite. Die thermoplastische Verbundkathodenschicht weist drei Schichten auf, wie etwa eine hydrophile aktive Schicht, eine gasdurchlässige hydrophobe Schicht und ein Stromsammelgitter. Das Stromsammelgitter, nämlich eine Nickelgitter, ist eingebettet in eine Mischung der hydrophoben und hydrophilen Zusammensetzung, was zu einem festen Verbund des Nickelgitters mit den vorgenannten Schichten führt. Die detaillierte Beschreibung der Kathodenstruktur sowie die Herstellung derselben sind kein Hauptaspekt dieses Patentes.

Die oben genannte Batterie wurde testweise vollständig in eine Meerwasserlösung eingetaucht, die eine Konzentration von 5 % w/w Seesalz pro Liter Wasser aufwies. Die gemessene Spannung bei einem Stromkreis überschritt 1,2 Volt für jede Zelle an den Ausgängen 19, 20 für den Fall der Parallelschaltung (Fig. 5). Im Fall der Serienschaltung (Fig. 6) wies die Testbatterie ca. 2,2 Volt auf und lieferte kontinuierlich und ununterbrochen ca. 1,9 Volt bei einer Last von 0,6 Ampere sowie 1,4 Volt bei einer Last von 1 Ampere. Die maximale Leistung betrug ca. 1,8 Watt. Bei 50 % entladener Batterie, wenn das Gewicht der Anoden um ca. 50 % reduziert wurde, betrug die Energiekapazität ungefähr 70 Wattstunden. Die Leistungsdichte betrug ca. 0,03 Watt pro cm² desjenigen Kathoden/Anoden-Zwischenraumbereiches, der innerhalb der Meerwasserlösung an der elektrochemischen Reaktion teilhat. Diese Werte überschreiten die Werte bekannter Meerwasserbatterien um das Zehnfache.

### Bezugszeichenliste:

- 1: Metall-Luft-Batterie/Brennstoffzelle
- 2: Anode
- 3.: Kathode
- 4.: Gehäuseraum
- 5: Elektrolyt
- 6: Seitenwandung
- 7: Bodenwandung
- 8: Brennstoffzelle/Luft-Metall-Batterie Spannungs-/Stromquelle
- 9: Kunststoffgehäuse
- 10: gitterförmige Schicht
- 11: elektrische Leitung
- 12: Kabel
- 13: Zwischenraum
- 14: Durchtrittsloch
- 15: Rahmenstruktur
- 17: Luftzuführleitung
- 18: Elektrodenanschluss
- 19: Negativausgang
- 20: Positivausgang
- 21: Meerwasser
- 22: Last
- 23: Gummistreifenbänder
- 24: Durchtrittsloch
- 25: obere Wandung
- 26: untere Wandung
- 27.: Seitenwandung
- 28.: Seitenwandung
- 29.: Seitenwandung
- 30.: Seitenwandung

## Patentansprüche

1. Elektrochemische Energie- und/oder Spannungs- und/oder Stromquelle, insbesondere Brennstoffzelle oder Batterie, bei der als Elektrolyt Meerwasser (21) und/oder Alkalilösung verwendbar ist, mit folgenden Merkmalen:
a) wenigstens einer für die Verwendung in einer elektrochemischen Metall-Luft-Zelle geeigneten Anode (2),
b) wenigstens einer, insbesondere plattenförmigen, Gas-Diffusionskathode oder Luftkathode (3), die zumindest eine hydrophobe Schicht aufweist,
c) einem Gehäuse (9), das einen durch eine oder mehrere flüssigkeitsundurchlässige Wandungen (15, 25 - 30) begrenzten, insbesondere inneren, Gehäuseraum (4) aufweist, wobei dem Gehäuseraum (4) über zumindest eine Öffnung (24) Luft oder Sauerstoff zuführbar ist,
d) zumindest eine (29, 30) der flüssigkeitsundurchlässigen Wandungen (15, 25 - 30) des Gehäuseraums (4) wird zumindest teil- bzw. bereichsweise durch die hydrophobe Schicht der Kathode (3) gebildet,
f) die Anode (2) ist von der Kathode (3) unter Bildung eines Zwischenraums (13) beabstandet und außerhalb des Gehäuseraums (4) angeordnet,
g) der Zwischenraum (13) zwischen Kathode und Anode (2) ist zumindest teilweise mit einem Elektrolyt (5), insbesondere Meerwasser (21), Salzwasser oder Alkalilösung, befüllbar.

2. Elektrochemische Energie- und/oder Spannungs- und/oder Stromquelle gemäß Anspruch 1 oder 2, **dadurch gekennzeichnet, dass** das insbesondere aus Kunststoff bestehende Gehäuse (9) einen Rahmen (15) oder eine Rahmenstruktur (15) aufweist, an dem die Kathode (3) flüssigkeitsdicht befestigt ist.

3. Elektrochemische Energie- und/oder Spannungs- und/oder Stromquelle gemäß Anspruch 1, 2 oder 3, **dadurch gekennzeichnet, dass** die Wandungen (15, 25 - 30) des Gehäuseraumes (4) zumindest annähernd einen Quader bilden.

4. Elektrochemische Energie- und/oder Spannungs- und/oder Stromquelle gemäß Anspruch 1, 2 oder 3, **dadurch gekennzeichnet, dass** wenigstens zwei gegenüberliegende Wandungen (29, 30) des Gehäuseraumes (4) zumindest bereichsweise durch plattenförmige Kathoden (3) bzw. die hydrophoben Schichten der plattenförmigen Kathoden (3) gebildet sind.

5. Elektrochemische Energie- und/oder Spannungs- und/oder Stromquelle gemäß einem oder mehreren der vorhergehenden Ansprüche, **dadurch gekennzeichnet, dass** jeder Kathode (3) auf der dem Gehäuseraum (4) abgewandten Seite jeweils eine plattenförmige Anode (2) zugeordnet ist, wobei die plattenförmigen Anoden (2) mit dem Gehäuse (4) insbesondere lösbar verbunden sind.

6. Elektrochemische Energie- und/oder Spannungs- und/oder Stromquelle gemäß einem oder mehreren der vorhergehenden Ansprüche, **dadurch gekennzeichnet, dass** dem Gehäuseraum (4) die Luft oder der Sauerstoff über wenigstens ein in einer der Gehäuseraumwandungen (25) angeordnetes Durchtrittsloch (24) zuführbar ist.

7. Elektrochemische Energie- und/oder Spannungs- und/oder Stromquelle gemäß Anspruch 6, **dadurch gekennzeichnet, dass** das Durchtrittsloch (24) in einer der nicht durch die Kathode (3) bzw. die Kathoden (3) gebildeten Wandung (25) des Gehäuseraumes (4) angeordnet ist,

8. Elektrochemische Energie- und/oder Spannungs- und/oder Stromquelle gemäß Anspruch 7 oder 8, **dadurch gekennzeichnet, dass** das Durchtrittsloch (24) bezogen auf den bestimmungsgemäßen Gebrauch der Spannung-/Stromquelle (8) im oberen Bereich der Wandungen (15, 25 - 30) des Gehäuseraums (4) angeordnet ist, vorzugsweise in der Oberseitenwandung (25) der einen Quader bildenden Gehäuseraumwandungen (15, 25 - 30).

9. Elektrochemische Energie- und/oder Spannungs- und/oder Stromquelle gemäß Anspruch 6, 7 oder 8, **dadurch gekennzeichnet, dass** eine sich vorzugsweise nach oben erstreckende Luftzuführleitung (17) flüssigkeitsdicht insbesondere einstückig mit dem Durchtrittsloch (24) verbunden ist.

10. Elektrochemische Energie- und/oder Spannungs- und/oder Stromquelle gemäß Anspruch 6, 7, 8 oder 9, **dadurch gekennzeichnet, dass** die Luftzuführleitung an dem dem Durchtrittsloch (14) entgegengesetzten Ende eine Lufteinlassöffnung (24) aufweist.

11. Elektrochemische Energie- und/oder Spannungs- und/oder Stromquelle gemäß einem oder mehreren der vorhergehenden Ansprüche, **dadurch gekennzeichnet, dass** die Kathode (3) eine gasdurchlässige, hydrophobe Schicht aufweist, eine gasundurchlässige hydrophile Schicht sowie ein elektrisch leitfähiges Element, insbesondere eine stromleitende bzw. stromsammelnde Schicht.

12. Elektrochemische Energie- und/oder Spannungs- und/oder Stromquelle gemäß einem oder mehreren der vorhergehenden Ansprüche, **dadurch gekennzeichnet, dass** die Wandungen (15, 25 - 30) des Gehäuseraums (4) diesen Gehäuseraum (4) - bis auf das oder die Durchtrittslöcher (14) in der oder den Wandungen (15, 25 - 30) - vollständig umgeben.

13. Elektrochemische Energie- und/oder Spannungs- und/oder Stromquelle gemäß einem oder mehreren der vorhergehenden Ansprüche, **dadurch gekennzeichnet, dass** die gasdurchlässige, hydrophobe Schicht auf der dem Gehäuseraum (4) zugewandten Seite angeordnet ist und die gasundurchlässige, hydrophile Schicht auf der dem Gehäuseraum (4) abgewandten Seite.

14. Elektrochemische Energie- und/oder Spannungs- und/oder Stromquelle gemäß einem oder mehreren der vorhergehenden Ansprüche, **dadurch gekennzeichnet, dass** zwischen der gasdurchlässigen, hydrophoben Schicht und der gasundurchlässigen, hydrophilen Schicht die stromleitende bzw. stromsammelnde Schicht (current collector layer) angeordnet ist.

15. Elektrochemische Energie- und/oder Spannungs- und/oder Stromquelle gemäß einem oder mehreren der vorhergehenden Ansprüche, **dadurch gekennzeichnet, dass** die Gas-Diffusionskathode oder Luftkathode (3) aus Kunststoff-Kohlenstoff-Verbundmaterialien gebildet ist, insbesondere aus thermoplastischen Kohlenstoff Verbundmaterialien (thermoplastic carbon composite materials).

16. Elektrochemische Energie- und/oder Spannungs- und/oder Stromquelle gemäß einem oder mehreren der vorhergehenden Ansprüche, **dadurch gekennzeichnet, dass** die Gas-Diffusionskathode oder Luftkathode (3) mehrere Schichten aufweist mit zumindest einer stromleitenden bzw. stromsammelnden Schicht (current collector layer) aus einem inerten Metall wie etwa Nickel oder dergleichen oder aus einem nicht-inerten Metall wie etwa Aluminium oder Kupfer oder dergleichen, überzogen oder beschichtet mit Au, Pt, Ni, Pb oder Sn.

17. Elektrochemische Energie- und/oder Spannungs- und/oder Stromquelle gemäß einem oder mehreren der vorhergehenden Ansprüche, **dadurch gekennzeichnet, dass** die stromleitende bzw. stromsammelnde Schicht (current collector layer) dendritische Vorsprünge (dendritic protrusions) aufweist.

18. Elektrochemische Energie- und/oder Spannungs- und/oder Stromquelle gemäß einem oder mehreren der vorhergehenden Ansprüche, **dadurch gekennzeichnet, dass** die Gas-Diffusionskathode oder Luftkathode (3) eine hydrophobe Schicht und eine hydrophile, aktive Schicht aufweist, die durch Edelmetalle wie etwa Pt-Pd oder Ag oder Silberoxid katalisiert ist/sind und/oder komplexe Macrocyklen oder Chelaten, wie etwa Kohlenstoff-Fullerenes oder Kohlenstoff-Nanotubes.

19. Elektrochemische Energie- und/oder Spannungs- und/oder Stromquelle gemäß einem oder mehreren der vorhergehenden Ansprüche, **dadurch gekennzeichnet, dass** der elektrochemischen Energie- und/oder Spannungs- und/oder Stromquelle, insbesondere dem Gehäuse, vorzugsweise dem Gehäuseraum (4), ein Behältnis, etwa ein Ballon oder ein Tank, zugeordnet ist, dass mit Luft oder Gas füllbar/gefüllt ist, und dass die Luft oder das Gas aus zumindest einer Öffnung des Behältnises dem Gehäuseraum (4), insbesondere der Gas-Diffunsionskathode oder Luftkathode (3), zuführbar ist.

20. Elektrochemische Energie- und/oder Spannungs- und/oder Stromquelle gemäß einem oder mehreren der vorhergehenden Ansprüche, **dadurch gekennzeichnet, dass** das Behältnis innerhalb des Gehäuseraums (4) angeordnet ist.

21. Elektrochemische Energie- und/oder Spannungs- und/oder Stromquelle gemäß einem oder mehreren der vorhergehenden Ansprüche, **dadurch gekennzeichnet, dass** innerhalb des Gehäuseraums ein DC/DC- oder DC/AC-Wandler angeordnet ist, insbesondere zur Lastanpassung.

22. Elektrochemische Energie- und/oder Spannungs- und/oder Stromquelle gemäß einem oder mehreren der vorhergehenden Ansprüche, **gekennzeichnet durch** eine Zuführleitung, über die die Luft oder das Gas aus dem Behältnis dem Gehäuseraum (4), insbesondere der Gas-Diffusionskathode oder Luftkathode (3), zuführbar ist.
